# EUROPEAN PATENT APPLICATION

(11) **EP 2 837 953 A1**
(43) Date of publication of application: **18.02.2015**
(21) Application number: 12874053.7
(22) Date of filing: 11.12.2012
(51) Int. Cl.: G01V 1/30, G01V 1/28

(54) **GEOLOGIC QUALITY FACTOR INVERSION METHOD**

(30) Priority: 13.04.2012 CN 201210109416
(71) Applicant: China National Petroleum Corporation, Beijing 100724 (CN); BGP Inc., China National Petroleum Corporation, Zhuozhou, Hebei 072751 (CN)
(72) Inventor: ZHANG, Gulan, Zhuozhou Hebei 072751 (CN); WANG, Ximing, Zhuozhou Hebei 072751 (CN); ZHANG, Qinghong, Zhuozhou Hebei 072751 (CN); LI, Yanpeng, Zhuozhou Hebei 072751 (CN); PENG, Jixin, Zhuozhou Hebei 072751 (CN); ZHAO, Yufeng, Zhuozhou Hebei 072751 (CN); RONG, Jiaojun, Zhuozhou Hebei 072751 (CN); LI, Keen, Zhuozhou Hebei 072751 (CN); JIN, Qihu, Zhuozhou Hebei 072751 (CN); GUO, Xiaoling, Zhuozhou Hebei 072751 (CN)
(74) Representative: Hoffmann Eitle
(86) International application number: PCT/CN2012/001686
(87) International publication number: WO 2013/152468

(57) **Abstract**

Provided is a method for performing layer Q factor inversion by using an amplitude spectrum attribute of a downlink wave of vertical seismic profile data in a geophysical exploration data processing technology. In the method, first an F-K (frequency-wave number) method is used to perform wave field separation on VSP original data, so as to obtain a downlink wave; a downlink sub-wave and a monitoring sub-wave are selected to undergone Fourier transform to obtain an amplitude spectrum, polynomial fitting is performed on the amplitude spectrum to obtain an equivalent Q, and a formula between the equivalent Q and a layer Q is used to perform inversion, so as to obtain the layer Q. The method has a strong capability of resisting random disturbance, and is capable of removing a difference of triggering sub-wave. The algorithm is simple and can greatly save workload; moreover, the layer Q value obtained through inversion has a desirable stability and high precision.

## Description

### TECHNICAL FILED

The present invention relates to a seismic exploration data processing technology, which is a geologic quality factor inversion method by using an amplitude spectrum attribute of a downlink wave of vertical seismic profile (VSP) data, with a desirable stability.

### BACKGROUND

With an increase in a demand of seismic exploration precision, seismic data with high resolution is needed to describe in detail oil and gas reservoir, but attenuation due to geologic absorption is a major factor for affecting the resolution of the seismic data. The attenuation due to the geologic absorption mainly expresses as an amplitude attenuation, a phase distortion, and a frequency reduction (moreover, the attenuation in a high-frequency portion is faster than that in a low-frequency portion, and the attenuation in a shallow layer is faster than that in a deep layer) during propagation of a seismic wave, which seriously reduces the resolution of the seismic data. A geologic quality factor (Q factor) value is estimated accurately, and then an effective inverse Q filtering compensation is performed on a prestack or post-stack seismic record, which may make waveforms of reflection waves in shallow, medium and deep layers of seismic profile substantially consistent, the make high-frequency portion of the medium and deep layers strengthen, and make the frequency spectrum widen, so as to recovery original seismic waveform and eliminate effects of a sub-wave time varying, thereby meeting a hypothesis required for deconvolution and sub-wave estimation that the sub-wave is time-invariant. Thus, the seismic profile quality can be effectively improved so as to facilitate the processing and explanation of the seismic data.

During zero-offset VSP (vertical seismic profile) data acquisition, a shot point is very close to a pit head, so that downlink direct waves received in different depths have the same propagation path. Therefore, the downlink direct waves in the seismic records with different depths can be directly used for inverting the geologic quality factor (Q factor), and performing the inverse Q filtering, so as to increase the resolution of the VSP data and drive the surface-seismic processing to increase the resolution. Therefore, how to perform a precise Q extraction by using the zero-offset VSP data has a great important practical application value.

The geologic quality factor Q inversion method is mainly to apply a logarithmic spectrum comparison method, a central frequency offset method and a peak frequency offset method, a scanning analysis technology and a time-frequency analysis combining method, and a multi-window analysis method on the amplitude spectrum of the seismic sub-wave. Among these, it is assumed in the central frequency offset method and the peak frequency offset method that the amplitude spectrum of the seismic wave can be represented by a Gaussian spectrum; and it is assumed in the time-frequency analysis method that the seismic sub-wave has a zero phase.

Mathneey and Nowack proposed an instantaneous frequency matching method, which is to use an iteration process to modify a causal attenuation operator, so as to make weighted instantaneous frequencies by the operator acting on an envelope peak after a reference pulse and on an envelope peak of a target pulse closest, thereby inversing a quality factor of a medium. Adopting this method, Mathneey and Nowack estimated the attenuation of the seismic data on earth crust diffraction. Dasios et al. estimated the attenuation of a full-wave train acoustic logging record by adopting an instantaneous frequency matching method. Such method overcomes some shortcomings of the logarithmic spectrum comparison method, for example, it is not necessary to select a variable frequency band range and so on. However, this method needs to use a Hilbert transform method to calculate the instantaneous frequency, and to use a complicated iteration process to match the instantaneous frequency. As is well-known, the Hilbert transform is sensitive to noise; therefore, the use of the instantaneous frequency matching method in a seismic signal with noise is limited. Barnes assumed that a seismic source sub-wave is an ideal band-pass sub-wave, and gave a relationship between the instantaneous frequency and the Q value as well as the transmission time, but the practical seismic source sub-wave is greatly different from the ideal band-pass sub-wave.

All the methods above are hardly applied to the practical data, and do not disclose how to use the downlink wave of the VSP data. Moreover, in all the methods above, a Q value obtained through inversion and a geologic velocity value hardly have correspondence, and it is impossible to estimate the reasonability of the Q value obtained through inversion. In addition, none of the methods above considers an excitation sub-wave difference caused by an excitation environment during collection, which hardly has applicability and generalization performance, and certainly will influence the stability of the quality factor Q.

### SUMMARY

An object of the present invention is to provide a geologic quality factor inversion method by using an amplitude spectrum attribute of a downlink wave of vertical seismic profile (VSP) data, with a desirable stability.

The present invention comprises the specific steps:
1) shocking a surface seismic source, receiving vertical seismic profile data by geophone in underground, and receiving, by a geophone near the seismic source, a monitoring sub-wave signal corresponding to each trace of vertical seismic profile record;
2) picking up a first arrival 1 of each trace of the vertical seismic profile record, and a first arrival 2 of the monitoring sub-wave signal corresponding to each trace of the vertical seismic profile record;
3) flattening downlink waves by subtracting the first arrival time 1 of each trace of the vertical seismic profile record from time of each sampling point of the said trace, so as to obtain a first wave field;
4) obtaining a frequency-wave number (F-K) spectrum of the first wave field by firstly applying Fourier transform to the first wave field in time direction so as to transform into frequency domain, thereby obtaining an amplitude spectrum of all of the vertical seismic profile record, and then applying Fourier transform to the amplitude spectrum in a direction of a trace number so as to transform into a wave number domain;
5) multiplying the frequency-wave number (F-K) spectrum corresponding to uplink wave in the frequency-wave number (F-K) spectrum obtained in step (4) by zero; then performing an inverse Fourier transform in a direction of wave number to obtain an amplitude spectrum; applying an inverse Fourier transform in the frequency direction to the obtained amplitude spectrum so as to obtain a wave filed 2 in the time domain;
6) applying Fourier transform to signal in a time window opening backwards from a first sampling point in each trace of the downlink wave in the wave field 2, so as to obtain an amplitude spectrum 1 on every frequency; and dividing the amplitude spectrum corresponding to every frequency by a square of a value of the corresponding frequency so as to obtain an amplitude spectrum 2 in an exponential form;
7) obtaining the amplitude spectrum 2 of every frequency in the exponential form in each trace of the downlink wave by repeating the step 6);
8) obtaining a monomial coefficient and a quadratic term coefficient corresponding to a trace of downlink sub-wave by taking a natural logarithm of the amplitude spectrum 2 of the trace obtained in the step 7) and then performing quadratic function fitting related to frequency by using a least square method;
9) obtaining the monomial coefficient and the quadratic term coefficient corresponding to each trace of the downlink sub-wave in the vertical seismic profile record by repeating the step 8);
10) picking up the first arrival 2 of the monitoring sub-wave recorded in the step 1), obtaining an amplitude spectrum 3 of the monitoring sub-wave on each frequency by performing Fourier transform on the monitoring sub-wave signal corresponding to each trace of the vertical seismic profile record inside a time window opening backwards from the first arrival 2 of the monitoring sub-wave signal; and obtaining an amplitude spectrum 4 of each trace of the monitoring sub-wave in the exponential form by dividing the amplitude spectrum corresponding to every frequency by the square of value of the corresponding frequency;
11) obtaining a monomial coefficient and a quadratic term coefficient of the frequency spectrum of a trace of the monitoring sub-wave by taking a natural logarithm of the amplitude spectrum 4 obtained in the step 10) and then performing quadratic function fitting related to frequency by using the least square method;
12) obtaining the monomial coefficient and the quadratic term coefficient corresponding to each trace of the monitoring sub-waves of the vertical seismic profile record by repeating step 11);
13) solving, for each trace of the vertical seismic profile record, an average value between the quadratic term coefficient of the trace and the quadratic term coefficient of the corresponding monitoring sub-wave obtained in step 12);
14) obtaining a monomial coefficient and a quadratic term coefficient by taking a natural logarithm of the amplitude spectrum 2 obtained in the step 7), subtracting a product of the average value of the quadratic term coefficients of the seismic trace obtained in the step 13) and the square of the frequency, and then performing quadratic function fitting related to frequency by using the square method;
15) obtaining an equivalent Q (geologic quality factor) value 1 by dividing the first arrival time 1 of each trace of vertical seismic profile record by the monomial coefficient of the trace obtained in the step 14);
16) obtaining the equivalent geologic quality factor 1 of each trace of the vertical seismic profile record by repeating the step 15), and obtain an equivalent Q (geologic quality factor) value 2 by performing statistic smoothing on the equivalent geologic quality factors 1 of all traces of the vertical seismic profile record;
17) obtaining an absorption coefficient of each trace of the vertical seismic profile record by dividing the first arrival time 1 of the trace by the equivalent Q (geologic quality factor) value 2 corresponding to the trace of the record;
18) obtaining the layer Q (geologic quality factor) value corresponding to a trace of the vertical seismic profile record by dividing a difference value between the first arrival 1 of adjacent traces of the vertical seismic profile record by a difference value between the absorption coefficients of the adjacent traces;
19) repeating the step 18), until the layer Q (geologic quality factor) value corresponding to each trace of the vertical seismic profile record are inversed.

### BRIEF DESCRIPTION OF THE DRAWINGS

Fig.1 is a schematic diagram of the downlink wave;
Fig.2 is a schematic diagram of a cut-out downlink wave;
Fig.3 is an amplitude spectrum of the cut-out downlink wave;

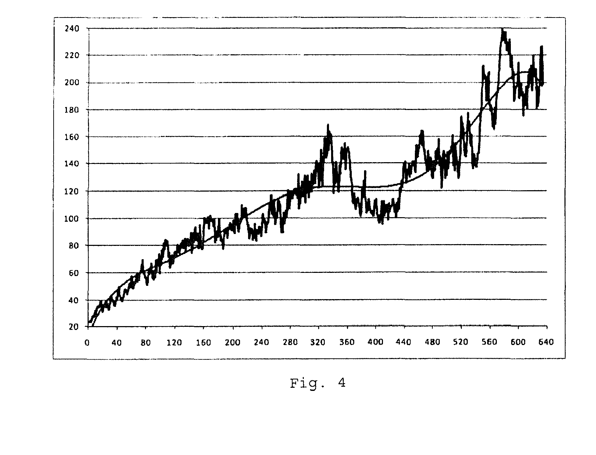

Fig. 4 is a layer Q value obtained through the inversion according to the present invention.

### DETAILED DESCRIPTION OF THE EMBODIMENTS

Hereinafter, a detail of the present invention will be described.

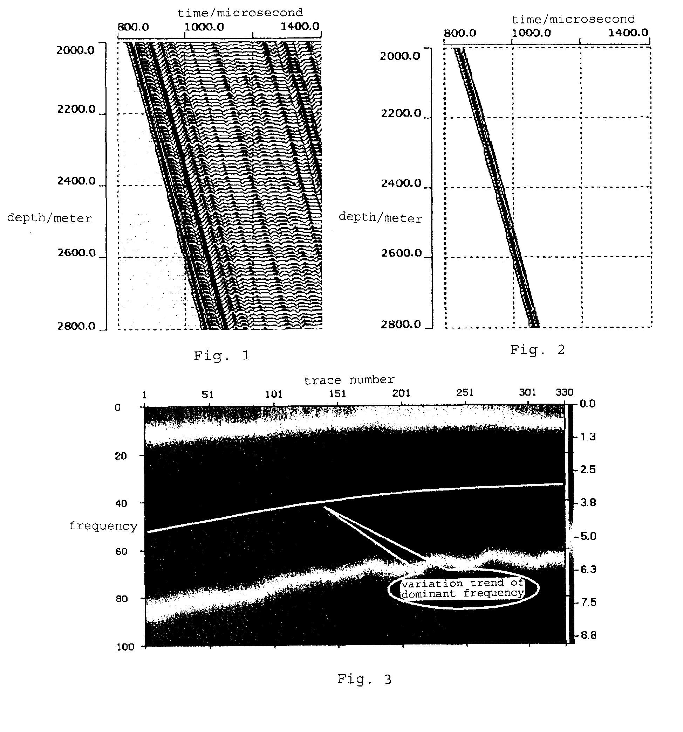

The present invention provides a geologic quality factor inversion method by using an amplitude spectrum attribute of a downlink wave of vertical seismic profile (VSP) data, with a desirable stability. The specific implementation steps are as follows:
1) shocking a surface seismic source, receiving vertical seismic profile data by geophone in underground, and receiving, by a geophone near the seismic source, a monitoring sub-wave signal corresponding to each trace of vertical seismic profile record;
2) picking up a first arrival 1 of each trace of the vertical seismic profile record, and a first arrival 2 of the monitoring sub-wave signal corresponding to each trace of the vertical seismic profile record;
3) flattening downlink waves by subtracting the first arrival time 1 of each trace of the vertical seismic profile record from time of each sampling point of the said trace, so as to obtain a first wave field;
4) obtaining a frequency-wave number (F-K) spectrum of the first wave field by firstly applying Fourier transform to the first wave field in time direction so as to transform into frequency domain, thereby obtaining an amplitude spectrum of the entire vertical seismic profile record, and then applying Fourier transform to the amplitude spectrum in a direction of a trace number so as to transform into a wave number domain;
5) multiplying the frequency-wave number (F-K) spectrum corresponding to uplink waves in the frequency-wave number (F-K) spectrum obtained in step (4) by zero; then performing an inverse Fourier transform in a direction of wave number to obtain an amplitude spectrum; applying an inverse Fourier transform to the obtained amplitude spectrum in the frequency direction so as to obtain a wave filed 2 in the time domain;
6) in the wave field 2, as shown in Fig. 1, opening a time window backwards from a first sampling point in each trace of the downlink wave, and, as shown in Fig. 2, applying Fourier transform to signal in the time window, so as to obtain an amplitude spectrum 1 on every frequency; and, as shown in Fig. 3, dividing the amplitude spectrum corresponding to every frequency by a square of a value of the corresponding frequency so as to obtain an amplitude spectrum 2 in an exponential form;
7) obtaining the amplitude spectrum 2 of every frequency in the exponential form in each trace of the downlink wave by repeating the step 6);
8) obtaining a monomial coefficient and a quadratic term coefficient corresponding to a trace of downlink sub-wave by taking a natural logarithm of the amplitude spectrum 2 of the trace obtained in the step 7) and then performing quadratic function fitting related to frequency by using a least square method;
9) obtaining the monomial coefficient and the quadratic term coefficient corresponding to each trace of the downlink sub-wave in the vertical seismic profile record by repeating the step 8);
10) picking up the first arrival 2 of the monitoring sub-wave recorded in the step 1), obtaining an amplitude spectrum 3 of the monitoring sub-wave on each frequency by applying Fourier transform to the monitoring sub-wave signal corresponding to each trace of the vertical seismic profile record inside a time window opening backwards from the first arrival 2 of the monitoring sub-wave signal; and obtaining an amplitude spectrum 4 of each trace of the monitoring sub-wave in the exponential form by dividing the amplitude spectrum corresponding to every frequency by the square of value of the corresponding frequency;
11) obtaining a monomial coefficient and a quadratic term coefficient of the frequency spectrum of a trace of the monitoring sub-wave by taking a natural logarithm of the amplitude spectrum 4 obtained in the step 10) and then performing quadratic function fitting related to frequency by using the least square method by repeating step 11);
12) obtaining the monomial coefficient and the quadratic term coefficient corresponding to each trace of the monitoring sub-waves of the vertical seismic profile record;
13) solving, for each trace of the vertical seismic profile record, an average value between the quadratic term coefficient of the trace and the quadratic term coefficient of the corresponding monitoring sub-wave obtained in step 12);
14) obtaining a monomial coefficient and a quadratic term coefficient by taking a natural logarithm of the amplitude spectrum 2 obtained in the step 7), subtracting a product of the average value of the quadratic term coefficients of the seismic trace obtained in the step 13) and the square of the frequency, and then performing quadratic function fitting related to frequency by using the square method;
15) obtaining an equivalent Q (geologic quality factor) value 1 by dividing the first arrival time 1 of each trace of vertical seismic profile record by the monomial coefficient of the trace obtained in the step 14);
16) obtaining the equivalent geologic quality factor 1 of each trace of the vertical seismic profile record by repeating the step 15), and obtain an equivalent Q (geologic quality factor) value 2 by performing statistic smoothing on the equivalent geologic quality factors 1 of all traces of the vertical seismic profile record;
17) obtaining an absorption coefficient of each trace of the vertical seismic profile record by dividing the first arrival time 1 of the trace by the equivalent Q (geologic quality factor) value 2 corresponding to the trace of the record;
18) obtaining the layer Q (geologic quality factor) value corresponding to a trace of the vertical seismic profile record by dividing a difference value between the first arrival 1 of adjacent traces of the vertical seismic profile record by a difference value between the absorption coefficients of the adjacent traces;
19) repeating the step 18), until the layer Q (geologic quality factor) value corresponding to each trace of the vertical seismic profile record are inversed.

### INDUSTRIAL APPLICABILITY

The present invention has a strong capability of resisting random disturbance, and is capable of removing a difference of the shocked sub-waves. The algorithm is simple and may greatly save workload; moreover, the layer Q value obtained through the inversion has a desirable stability and high precision.

## Claims

1. A geologic quality factor inversion method, **characterized in** comprising:
1) shocking a surface seismic source, receiving vertical seismic profile data by geophone in underground, and receiving, by a geophone near the seismic source, a monitoring sub-wave signal corresponding to each trace of vertical seismic profile record;
2) picking up a first arrival 1 of each trace of the vertical seismic profile record, and a first arrival 2 of the monitoring sub-wave signal corresponding to each trace of the vertical seismic profile record;
3) flattening downlink waves by subtracting the first arrival time 1 of each trace of the vertical seismic profile record from time of each sampling point of the said trace, so as to obtain a first wave field;
4) obtaining a frequency-wave number (F-K) spectrum of the first wave field by firstly applying Fourier transform to the first wave field in time direction so as to transform into frequency domain, thereby obtaining an amplitude spectrum of all of the vertical seismic profile record, and then applying Fourier transform to the amplitude spectrum in a direction of a trace number so as to transform into a wave number domain;
5) multiplying the frequency-wave number (F-K) spectrum corresponding to uplink wave in the frequency-wave number (F-K) spectrum obtained in step (4) by zero; then performing an inverse Fourier transform in a direction of wave number to obtain an amplitude spectrum; applying an inverse Fourier transform in the frequency direction to the obtained amplitude spectrum so as to obtain a wave filed 2 in the time domain;
6) applying Fourier transform to signal in a time window opening backwards from a first sampling point in each trace of the downlink wave in the wave field 2, so as to obtain an amplitude spectrum 1 on every frequency; and dividing the amplitude spectrum corresponding to every frequency by a square of a value of the corresponding frequency so as to obtain an amplitude spectrum 2 in an exponential form;
7) obtaining the amplitude spectrum 2 of every frequency in the exponential form in each trace of the downlink wave by repeating the step 6);
8) obtaining a monomial coefficient and a quadratic term coefficient corresponding to a trace of downlink sub-wave by taking a natural logarithm of the amplitude spectrum 2 of the trace obtained in the step 7) and then performing quadratic function fitting related to frequency by using a least square method;
9) obtaining the monomial coefficient and the quadratic term coefficient corresponding to each trace of the downlink sub-wave in the vertical seismic profile record by repeating the step 8);
10) picking up the first arrival 2 of the monitoring sub-wave recorded in the step 1), obtaining an amplitude spectrum 3 of the monitoring sub-wave on each frequency by applying Fourier transform to the monitoring sub-wave signal corresponding to each trace of the vertical seismic profile record inside a time window opening backwards from the first arrival 2 of the monitoring sub-wave signal; and obtaining an amplitude spectrum 4 of each trace of the monitoring sub-wave in the exponential form by dividing the amplitude spectrum corresponding to every frequency by the square of value of the corresponding frequency;
11) obtaining a monomial coefficient and a quadratic term coefficient of the frequency spectrum of a trace of the monitoring sub-wave by taking a natural logarithm of the amplitude spectrum 4 obtained in the step 10) and then performing quadratic function fitting related to frequency by using the least square method;
12) obtaining the monomial coefficient and the quadratic term coefficient corresponding to each trace of the monitoring sub-waves of the vertical seismic profile record by repeating step 11);
13) solving, for each trace of the vertical seismic profile record, an average value between the quadratic term coefficient of the trace and the quadratic term coefficient of the corresponding monitoring sub-wave obtained in step 12);
14) obtaining a monomial coefficient and a quadratic term coefficient by taking a natural logarithm of the amplitude spectrum 2 obtained in the step 7), subtracting a product of the average value of the quadratic term coefficients of the seismic trace obtained in the step 13) and the square of the frequency, and then performing quadratic function fitting related to frequency by using the square method;
15) obtaining an equivalent geologic quality factor value 1 by dividing the first arrival time 1 of each trace of vertical seismic profile record by the monomial coefficient of the trace obtained in the step 14);
16) obtaining the equivalent geologic quality factor 1 of each trace of the vertical seismic profile record by repeating the step 15), and obtain an equivalent geologic quality factor value 2 by performing statistic smoothing on the equivalent geologic quality factors 1 of all traces of the vertical seismic profile record;
17) obtaining an absorption coefficient of each trace of the vertical seismic profile record by dividing the first arrival time 1 of the trace by the equivalent geologic quality factor value 2 corresponding to the trace of the record;
18) obtaining the geologic quality factor value corresponding to a trace of the vertical seismic profile record by dividing a difference value between the first arrival 1 of adjacent traces of the vertical seismic profile record by a difference value between the absorption coefficients of the adjacent traces;
19) repeating the step 18), until the geologic quality factor value corresponding to each trace of the vertical seismic profile record are inversed.
